# EUROPEAN PATENT SPECIFICATION

(11) **EP 1 819 764 B1**
(45) Date of publication and mention of the grant of the patent: **24.07.2019**
(21) Application number: 05814802.4
(22) Date of filing: 09.12.2005
(51) Int. Cl.: C08G 69/44, C08L 9/08, C03C 25/25, C03C 25/36, C03C 25/34

(54) **AQUEOUS BINDER FOR MINERAL FIBERS**
WÄSSRIGE BINDEMITTEL-ZUSAMMENSETZUNG FÜR MINERALFASERN
COMPOSITION DE LIANT AQUEUX POUR FIBRES MINÉRALES

(30) Priority: 10.12.2004 EP 04029397; 19.07.2005 US 700580 P
(43) Date of publication of application: 22.08.2007
(73) Proprietor: Rockwool International A/S, 2640 Hedehusene (DK)
(72) Inventor: HANSEN, Erling, Lennart, DK-2820 Gentofte (DK); NISSEN, Povl, DK-3650 Olstykke (DK)
(74) Representative: Letzelter, Felix Phillip
(86) International application number: PCT/EP2005/013257
(87) International publication number: WO 2006/061249

(56) References cited:
- EP-A- 1 086 932
- EP-A- 1 170 265
- EP-A- 1 382 642
- EP-A1- 0 583 086
- CA-A1- 2 247 312
- US-A- 6 071 994
- US-A- 6 146 746
- US-A1- 2002 035 236

## Description

### Field of the Invention

The present invention relates to an aqueous binder for mineral fiber products having improved hydrolytic stability, a method of producing a bonded mineral fiber product using said binder, and a mineral fiber product comprising mineral fibers in contact with the cured binder.

### Background of the Invention

Mineral fiber products generally comprise mineral fibers such as, e.g., man-made vitreous fibers (MMVF), glass fibers, ceramic fibers, basalt fibers, slag wool and stone wool, bonded together by a cured thermoset polymeric binder material. For use as thermal or acoustical insulation products, bonded mineral fiber mats are generally produced by converting a melt made of suitable raw materials to fibers in conventional manner, for instance by a spinning cup process or by a cascade rotor process. The fibers are blown into a forming chamber and, while airborne and while still hot, are sprayed with a binder solution and randomly deposited as a mat or web onto a travelling conveyor. The fiber mat is then transferred to a curing oven where heated air is blown through the mat to cure the binder and rigidly bond the mineral fibers together.

In the past, the binder resins of choice have been phenol/formaldehyde resins which can be economically produced and can be extended with urea prior to use as a binder. However, the desire to minimize Volatile Organic Compound (VOC) emissions from products in conjunction with existing and proposed legislation directed to the lowering or elimination of formaldehyde have led to the development of formaldehyde-free binders such as, for instance, the binder compositions based on polycarboxy polymers and polyols, as disclosed in EP-A-583086, EP-A-990727 and US-A-5,318,990.

Another group of non-phenol/formaldehyde binders for mineral fibers are the addition/elimination reaction products of aliphatic and/or aromatic anhyrides with alkanolamines, e.g., as disclosed in WO 99/36368, WO 01/05725, WO 01/96460, WO 02/06178 and WO 2004/007615. These mineral fiber binders are water soluble and exhibit excellent binding properties in terms of curing speed and curing density. Still, depending on the field of application of the bonded mineral fiber product, hydrolytic stability has remained an application property attracting continuous attention.

EP 1 382 642 A1 discloses a formaldehyde-free aqueous binder composition for bonding mineral fiber products, comprising a binder component (A) obtainable by reacting at least one alkanolamine with at least one carboxylic anhydride, and a binder component (B) which comprises at least one carbohydrate.

US 6 071 994 A describes formaldehyde-free aqueous binders comprising A) a polymer containing from 5 to 100 % by weight of units derived from an ethylenically unsaturated acid anhydride or from an ethylenically unsaturated dicarboxylic acid whose carboxyl groups can form an anhydride group, and B) an alkanolamine having at least two hydroxyl groups.

US 2002/035236 A1 discloses a condensation polymer having at least one carboxylic acid end group connected to an alkylamide group via an ester linkage. The polymer for powder paint compositions may be obtained through reaction of an alkanolamine and a cyclic anhydride after which a polymer is obtained through polycondensation.

US 6 146 746 A relates to the use of a formaldehyde-free aqueous binder comprising A) a polymer obtained by free-radical polymerization comprising 5 to 100% by weight of an ethylenically unsaturated acid anhydride or of an ethylenically unsaturated dicarboxylic acid whose carboxyl groups may form an anhydride group, and B) an alkanolamine having at least two hydroxyl groups as a coating composition for shaped articles.

EP 0 583 086 A1 describes a formaldehyde-free curable aqueous composition containing a polyacid, a polyol, and an optional phosphorous-containing accelerator. The composition may be used as a binder for heat resistant nonwovens such as nonwovens composed of fiberglass.

CA 2 247 312 A1 discloses formaldehyde-free aqueous binders containing A) a polymer consisting of 5 to 100 wt% of an ethylenically unsaturated acid anhydride or an ethylenically unsaturated bicarboxylic acid, the carboxylic acid groups of which can form an anhydride group, and B) an alkanol amine with at least two hydroxyl groups.

### Summary of the Invention

Accordingly, it was an object of the present invention to provide an aqueous binder composition which is particularly suitable for bonding mineral fibers, which exhibits excellent binding characteristics in terms of curing speed and strength, has good water solubility and dilutability and is capable of providing markedly improved hydrolytic stability.

A further object of the present invention was to provide a mineral fiber product bonded with the cured binder composition and exhibiting improved hydrolytic stability.

In accordance with a first aspect of the present invention, there is provided an aqueous binder composition comprising:
- a water-soluble binder component obtainable by reacting at least one alkanolamine with at least one carboxylic anhydride and, optionally, treating the reaction product with a base; and
- at least one hydrolytic stability-improving agent selected from allylamines; SBR latices; and compounds having at least one long-chain aliphatic moiety and at least one functional group, said aliphatic moiety being selected from linear or branched, saturated or unsaturated C₈-C₃₀ groups or substituents and said functional group being selected from carboxyl, anhydride, ester, amine and amide groups.

In accordance with a second aspect of the present invention, there is provided a method of producing a bonded mineral fiber product which comprises the steps of contacting the mineral fibers or mineral fiber product with an aqueous binder composition as defined above, and curing the binder composition.

In accordance with a third aspect of the present invention, there is provided a mineral fiber product comprising mineral fibers in contact with the cured binder composition defined above.

Mineral fiber products produced from the aqueous binder composition according to the present invention exhibit improved hydrolytic stability, i.e. reduced humidity take-up associated with more stable binding strength under humid conditions.

### Description of the Preferred Embodiments

The formaldehyde-free aqueous binder composition according to the present disclosure comprises:
- water-soluble binder component obtainable by reacting at least one alkanolamine with at least one carboxylic anhydride and, optionally, treating the reaction product with a base; and
- at least one hydrolytic stability-improving agent selected from monoalkanolamines; allylamines; peroxy compounds; epoxy compounds; compounds having at least one long-chain aliphatic moiety and at least one functional group; and SBR latices.

### Binder Component

The binder component of the aqueous binder composition according to the present invention comprises the water-soluble reaction product of an alkanolamine with a carboxylic anhydride.

Preferred alkanolamines for use in the preparation of binder component are alkanolamines having at least two hydroxy groups such as, for instance, alkanolamines represented by the formula 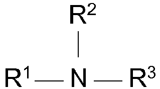 wherein R¹ is hydrogen, a C₁₋₁₀ alkyl group or a C₁₋₁₀ hydroxyalkyl group; and R² and R³ are C₁₋₁₀ hydroxyalkyl groups.

Preferably, R² and R³, independently are C₂₋₅ hydroxyalkyl groups, and R¹ is hydrogen, a C₁₋₅ alkyl group or a C₂₋₅ hydroxyalkyl group. Particularly preferred hydroxyalkyl groups are β-hydroxyalkyl groups.

Specific examples of suitable alkanolamines are diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane. Diethanolamine is the currently preferred alkanolamine.

The carboxylic anhydride reactant may be selected from saturated or unsaturated aliphatic and cycloaliphatic anhydrides, aromatic anhydrides and mixtures thereof, saturated or unsaturated cycloaliphatic anhydrides, aromatic anhydrides and mixtures thereof being preferred. In a particularly preferred embodiment of the invention, two different anhydrides selected from cycloaliphatic and/or aromatic anhydrides are employed. These different anhydrides are preferably reacted in sequence.

Specific examples of suitable aliphatic carboxylic anhydrides are succinic anhydride, maleic anhydride and glutaric anhydride. Specific examples of suitable cycloaliphatic anhydrides are tetrahydrophthalic anhydride, hexahydrophthalic anhydride, methyltetrahydrophthalic anhydride and nadic anhydride, i.e. endo-cis-bicyclo[2.2.1]-5-heptene-2,3-dicarboxylic anhydride. Specific examples of suitable aromatic anhydrides are phthalic anhydride, methylphthalic anhydride, trimellitic anhydride and pyromellitic dianhydride.

In the above embodiment employing two different anhydrides, a combination of cycloaliphatic anhydride and aromatic anhydride is particularly preferred, e.g. a combination of tetrahydrophthalic anhydride (THPA) and trimellitic anhydride (TMA). The molar ratio of cycloaliphatic anhydride to aromatic anhydride is preferably within the range of from 0.1 to 10, more preferably within the range of from 0.5 to 3. Curing tests with the system THPA/TMA have surprisingly shown that a lower molar ratio of THPA to TMA results in a higher curing speed.

In the preparation of the binder component (a), the proportion of the alkanolamine and carboxylic anhydride reactants is preferably selected such that the ratio of equivalents of amine plus hydroxy groups (NH+OH) to equivalents of carboxy groups (COOH) is at least 0.4, more preferably at least 0.6. By employing these minimum ratios, a too high excess of free unreacted acid is avoided which under specific conditions could lead to a displacement of binder in the curing oven, i.e. to a non-uniform distribution in amount of binder between the bottom and top of the mineral wool mat or web. Furthermore, high amounts of unreacted acid may increase corrosiveness.

On the other hand, the properties of the final binder composition, such as curing behaviour, durability and humidity resistance are determined by the total ratio of reactive groups present. Therefore, for optimum performance, the ratio of equivalents of amine plus hydroxy groups (NH+OH) to equivalents of carboxy groups (COOH) in the final binder composition is preferably adjusted to 2.0 or less, more preferably to 1.7 or less. In general, the final binder composition has an equivalent ratio of (NH+OH) / (COOH) within the range of from 1.25 to 1.55.

The reaction between the alkanolamine and carboxylic anhydride reactants is carried out in the usual manner, for instance, as described in WO 99/36368, WO 01/05725, WO 02/06178 and WO 2004/007615, the entire contents of which is incorporated herein by reference.

The reaction temperature is generally within the range of from 50°C to 200°C. In a preferred embodiment and, in particular, when two different anhydrides are employed, the alkanolamine is first heated to a temperature of at least about 40°C, preferably at least about 60°C, whereafter the first anhydride is added and the reaction temperature is raised to at least about 70°C, preferably at least about 95°C and more preferably at least about 125°C, at which temperature the second anhydride is added to the reaction mixture when substantially all the first anhydride has dissolved and/or reacted. Increasing the reaction temperature from 70-95°C to 100-200°C allows a higher conversion of monomers to oligomers. In this case, a preferred temperature range is 105-170°C, more preferably 110-150°C.

If water is added after the first anhydride has reacted, either together with the second anhydride or before addition of the second anhydride or at the end of the reaction, in an amount to make the binder easily pumpable, a binder having an increased molecular weight (compared to water addition from the start) is obtained which still has a desired pumpability, viscosity, and water dilutability and contains less unreacted monomers.

In order to improve the water solubility and dilutability of the binder, a base may be added up to a pH of about 8, preferably a pH of between about 5-8, and more preferably a pH of about 6-7. Furthermore, the addition of a base will cause at least partial neutralization of unreacted acids and a concomitant reduction of corrosiveness. Normally, the base will be added in an amount sufficient to achieve the desired water solubility or dilutability. The base is preferably selected from volatile bases which will evaporate at or below curing temperature and hence will not influence curing. Specific examples of suitable bases are ammonia (NH₃) and organic amines such as diethanolamine (DEA), triethanolamine (TEA) and dimethylethanolamine (DMEA). The base is preferably added to the reaction mixture after the reaction between the alkanol amine and the carboxylic anhydride(s) has been actively stopped by adding water.

If appropriate, an additional acid monomer may be employed in the reaction and is preferably added to the reaction mixture before addition of the anhydride reactant. Specific examples of suitable acid monomers are di-, tri- and polycarboxylic acids such as adipic acid, citric acid, sebacic acid, azelaic acid, succinic acid, tartaric acid and trimellitic acid.

Furthermore, one or more polycarboxy crosslinking agents may be added after termination of the reaction and, optionally, together with the base. Suitable polycarboxy crosslinking agents are, e.g., homopolymers and copolymers of acidic monomers such as acrylic acid, alkylacrylic acid (e.g. methacrylic acid) and maleic acid, and copolymers of such acidic monomers and acrylates. The weight percentage of these polycarboxy crosslinking agents is at least 0.5, preferably at least 10 wt.%, and up to 50, preferably up to 30 wt.%, more preferably up to 15 wt.%, based on the binder composition.

### Hvdrolvtic stability-improving agent

The aqueous binder composition according to the present disclosure comprises at least one hydrolytic stability-improving agent selected from monoalkanolamines; allylamines; peroxy compounds; epoxy compounds; compounds having at least one long-chain aliphatic moiety and at least one functional group; and SBR latices.

Specific examples of monoalkanolamines suitable as the hydrolytic stability-improving agent are ethanolamine, isopropanolamine, hexanolamine, n-butanolamine, 3-amino-1,2-propanediol, 2-amino-1,3-propanediol and tris(hydroxymethyl)-aminomethane. Without wishing to be bound to any theory, it is currently believed that these monoalkanolamines increase hydrolytic stability by forming hydrolytically stable imide species in a reaction with the constituents of the binder component.

Where the hydrolytic stability-improving agent is an allylamine, suitable examples thereof are monoallylamine, diallylamine and triallylamine.

Specific examples of peroxy compounds suitable as hydrolytic stability-improving agents are hydroperoxides, peroxides, diacyl peroxides, peroxy acids, peroxy esters, ketone peroxides and endoperoxides, such as dibenzoyl peroxide, tert-butylperoxybenzoate, di-tert-butyl peroxide, dicumyl peroxide and diacetyl peroxide. Peroxy compounds are preferably employed as hydrolytic stability-improving agents if the binder composition contains radically cross-linkable unsaturated components .

Preferred epoxy compounds suitable as hydrolytic stability-improving agents include epoxy silanes such as γ-glycidyloxypropyltrimethoxysilane, and low molecular weight (liquid) epoxy resins which are dispersible in water, such as Epikote® dispersions marketed by Shell and XZ 92533.00 marketed by Dow Chemical.

Also suitable as hydrolytic stability-improving agents are compounds having at least one long-chain aliphatic moiety and at least one functional group. Preferably, the aliphatic moiety is a linear or branched, saturated or unsaturated C₈-C₃₀ group or substituent. The functional group is preferably selected from hydroxyl, carboxyl, anhydride, ester, amine and/or amide groups. Suitable examples of such compounds having at least one long-chain aliphatic moiety and at least one functional group are saturated or unsaturated fatty acids, fatty amines, fatty amides, fatty alcohols or fatty esters; and saturated or unsaturated carboxylic acids, carboxylic anhydrides, amines, amides, alcohols or esters having a linear or branched, saturated or unsaturated Cs-C₃₀ group or substituent in their molecule. Currently preferred compounds of that type are compounds similar to 2-decan-1-yl-succinic anhydride.

Another preferred type of hydrolytic stability-improving agents are styrenebutadiene (SBR) latices.

The hydrolytic stability-improving agent is generally employed in an amount of 0.01 to 20 wt.%, preferably 0.1 to 10 wt.% and more preferably 0.2 to 5 wt.%, based on the total solids content of the binder composition.

### Other Components

The binder composition according to the present invention may comprise one or more conventional binder additives.

These include, for instance, silanes such as, e.g., γ-aminopropyltriethoxysilane, curing accelerators such as, e.g., β-hydroxylalkylamides; the free acid and salt forms of phosphoric acid, phosphonic acid, phosphinic acid, citric acid and adipic acid. Other strong acids such as boric acid, sulphuric acid, nitric acid and p-toluenesulphonic acid may also be used, either alone or in combination with the just mentioned acids, in particular with phosphoric, phosphonic or phosphinic acid. Other suitable binder additives are thermal stabilizers; UV stabilizers; surface active agents; fillers such as clay, silicates, and magnesium sulfate; pigments such as titanium dioxide; hydrophobizing agents such as fluorinated compounds, mineral oils and silicone oils; flame retardants; corrosion inhibitors; urea; silica; magnesium hydroxide and others.

These binder additives and adjuvants are used in conventional amounts generally not exceeding 20 % by weight of the binder solids. The amount of curing accelerator in the binder composition is generally between 0.05 to 5 wt.%, based on solids, and also the amount of silanes is generally between 0.05 to 5 wt.%.

If appropriate, co-binders such as, e.g., carbohydrates may be employed in amounts of, for instance, up to 25-30 wt.%, based on binder solids.

### Final Binder Composition

The binder composition according to the present invention preferably has a solids content of from 10 to 40 wt.%. This is often the concentration range of the binder in storage containers before use.

In a form ready for application, the binder preferably has a solids content of from 1 to 30 wt.%.

For transportion, a solids content of the binder composition of from 60 to 75 wt.% is frequently employed.

In order to achieve adequate application properties and, in particular, spraying properties, the viscosity of the binder composition may be adjusted. This is accomplished, for instance, by controlling the type and concentration of binder components in the aqueous binder system. Viscosity may be kept within the desired ranges e.g. by controlling the molecular weight of binder component (lower reaction temperature, stopping the reaction by adding water at an earlier reaction stage, etc.), and by properly adjusting the relative amounts of the binder components and water solvent.

### Mineral fiber product

The formaldehyde-free aqueous binder composition according to the present invention may be applied to mineral fibers or mineral fiber products by conventional techniques such as, e.g., air or airless spraying, rotating disc atomization, padding, saturating, roll coating, curtain coating, beater deposition, or the like.

The mineral fibers may be any of man-made vitreous fibers (MMVF), glass fibers, ceramic fibers, basalt fibers, slag wool, rock wool, stone wool and others. The mineral fiber products are, for instance, woven and nonwoven fabrics, mats, batts, slabs, sheets and other shaped articles which find use, for example, as thermal or acoustical insulation materials, vibration damping, construction materials, facade insulation, reinforcing materials for roofing or flooring applications, as filter stock, as horticultural growing media and in other applications.

For the manufacture of conventional thermal or acoustical insulation products, the binder is normally applied in an amount of 0.1 to 15 %, preferably 0.3-10 %, of the bonded mineral fiber product.

In general, the binder composition is applied, normally by spraying, immediately after fiberization of the mineral melt whereafter the coated mineral wool is cured in a curing oven wherein heated air is passed through the mineral wool web to cure the binder. Typically, the curing oven is operated at a temperature of from about 200°C to about 400°C. Preferably, the curing temperature ranges from about 225 to about 300°C. Generally, the curing oven residence time is from 30 seconds to 20 minutes, depending on, for instance, the product density.

Besides conventional curing by heat (e.g. heated air) other curing methods may be used, for example curing with microwave or infrared radiation. If desired, the mineral wool web may also be subjected to a shaping process before curing.

The bonded mineral fiber product emerging from the curing oven in the form of e.g. a batt may be cut to a desired format and, if appropriate, compressed for packaging and shipping. It may also be employed as an intermediate for the manufacture of shaped articles and composite materials.

Although the formaldehyde-free aqueous binder composition according to the present invention is particularly useful for bonding mineral fibers, it may equally be employed in other applications typical for binders and sizing agents, e.g. as a binder for foundry sand, chipboard, cellulosic fibers, non-woven paper products, composites, molded articles, coatings etc.

The following examples are intended to further illustrate the aqueous binder composition and the use thereof as a binder for mineral fiber products. In these examples, the solids content is determined in accordance with DIN 16916, Part 2, Section 5.13, with the modification that the sample is heated at 200°C for one hour. Parts and percentages are by weight, unless indicated otherwise.

### Example 1

### Preparation of binder component

90 kg of diethanolamine (DEA) are charged in a 400 I reactor and heated to 60°C. Then, 50 kg tetrahydrophthalic anhydride (THPA) are added and the mixture heated to 90°C. Due to the exothermic reaction, the temperature increases and when it reaches 130°C, 25 kg of tetrahydrophthalic anhydride (THPA) is added in small portions while the temperature is kept at 130°C. After addition of all THPA, the reaction mixture is reacted for 10 min whereafter 50 kg of trimellitic anhydride (TMA) is added. After 1 hour reaction at 130°C, the reaction mixture is cooled to 95°C, water is added and the mixture is stirred for 1 hour. After cooling of the reaction mixture to below 30°C, a binder component having an equivalent ratio of (NH+OH) / (COOH) of 1.43 is obtained.

### Examples 2 to 15

### Preparation of binder compositions according to the present invention

For preparing the final binders, a curing accelerator (2% of phosphinic acid, based on binder solids) and the hydrolytic stability-improving agents listed in Table 1 below, in the amounts indicated (weight % of active material, based on binder solids), a base (4.5% ammonia) and 1.5% of silane (γ-aminopropyltriethoxysilane) are added to the binder component obtained in Example 1, whereafter the mixture is diluted to 25% solids in order to make the final binder.

**Table 1 (*not according to the invention):**

| Example No. | Hydrolytic stability-improving agent | Amount (%) |
|---|---|---|
| 2* | dibenzoylperoxide | 5 |
| 3* | tert-butyl peroxybenzoate | 5 |
| 4* | tert-butyl peroxybenzoate | 10 |
| 5* | monoethanolamine | 2.5 |
| 6* | monoethanolamine | 5 |
| 7* | isopropanolamine | 2.5 |
| 8* | isopropanolamine | 5 |
| 9 | diallylamine | 5 |
| 10 | 2-decan-1-yl-succinic anhydride | 2.5 |
| 11 | 2-decan-1-yl-succinic anhydride | 5 |
| 12* | epoxy dispersion (XZ 92533-00 of Dow Chemical) | 2.5 |
| 13* | epoxy dispersion (XZ 92533-00 of Dow Chemical) | 5 |
| 14 | SBR latex (Latexia 707 of Raisio) | 10 |
| 15* | Comparative (no hydrolytic stability-improving agent) | |

### Example 16

### Determination of hydrolytic stability

About 0.5 g of binder solution having a solids content of 25% is evenly spread over a quartz filter grade QM-A, WHA 1851-047 produced by Bie & Berntsen. The quartz filter is then placed in a hot air flash-curing apparatus and cured for 4 min at 235°C at a differential pressure over the filter of 190 mm water column.

After curing, the filter is positioned above 20-30 ml of ion-exchanged water contained in a plastic beaker with lid. The closed beaker is placed in a heating cupboard at 70°C.

The filter is weighed before application of the binder, before and after curing in the flash-curing apparatus, and after 3, 6 and 10 days exposure to the humid atmosphere in the plastic beaker. In order to determine the amount of water absorbed, normally five filters are tested for each binder composition.
The humidity take-up measured after 10 days exposure to the humid atmosphere is shown in Table 2 below.

**Table 2 (*not according to the invention):**

| Example No. | Hydrolytic stability-improving agent | Humidity take-up |
|---|---|---|
| 2* | dibenzoylperoxide | 92% |
| 3* | tert-butyl peroxybenzoate | 85% |
| 4* | tert-butyl peroxybenzoate | 83% |
| 5* | monoethanolamine | 90% |
| 11 | 2-decan-1-yl-succinic anhydride | 95% |
| 12* | epoxy dispersion (XZ 92533-00 of Dow Chemical) | 90% |
| 14 | SBR latex (Latexia 707 of Raisio) | 89% |
| 15* | Comparative (no hydrolytic stability-improving agent) | 100% |

As can be seen from these results, the humidity take-up of the binder compositions according to the present invention is markedly reduced relative to the comparative binder (Example 15).

## Claims

1. An aqueous binder composition for mineral fibers comprising:
- a water-soluble binder component obtainable by reacting at least one alkanolamine with at least one carboxylic anhydride and, optionally, treating the reaction product with a base; and
- at least one hydrolytic stability-improving agent selected from allylamines; SBR latices; and compounds having at least one long-chain aliphatic moiety and at least one functional group, said aliphatic moiety being selected from linear or branched, saturated or unsaturated C₈-C₃₀ groups or substituents and said functional group being selected from carboxyl, anhydride, ester, amine and amide groups.

2. The binder composition of claim 1 wherein the water-soluble binder component comprises the reaction product of at least one alkanolamine with at least one carboxylic anhydride in an equivalent ratio of amine and hydroxy groups (NH+OH) to carboxy groups (COOH) of at least 0.4.

3. The binder composition of claim 1 or 2 wherein at least one carboxylic anhydride is selected from cycloaliphatic and/or aromatic anhydrides.

4. The binder composition of claim 3 wherein the carboxylic anhydride comprises a combination of a cycloaliphatic and an aromatic anhydride.

5. The binder composition of 3 or 4 wherein the cycloaliphatic anhydride is selected from tetrahydrophthalic anhydride, hexahydrophthalic anhydride and methyl-tetrahydrophthalic anhydride.

6. The binder composition of any one of claims 3 to 5 wherein the aromatic anhydride is selected from phthalic anhydride, methylphthalic anhydride, trimellitic anhydride and pyromellitic dianhydride.

7. The binder composition of any one of claims 1 to 6 wherein the alkanolamine is selected from diethanolamine, triethanolamine, diisopropanolamine, triisopropanolamine, methyldiethanolamine, ethyldiethanolamine, n-butyldiethanolamine, methyldiisopropanolamine, ethylisopropanolamine, ethyldiisopropanolamine, 3-amino-1,2-propanediol, 2-amino-1,3-propanediol and tris(hydroxymethyl)aminomethane.

8. The binder composition of any one of claims 1 to 7 wherein the hydrolytic stability-improving agent is an allylamine selected from monoallylamine, diallylamine and triallylamine.

9. The binder composition of any one of claims 1 to 7 wherein the hydrolytic stability-improving agent is a compound having at least one long-chain aliphatic moiety and at least one functional group and is selected from saturated or unsaturated fatty acids, fatty amines, fatty amides or fatty esters; and saturated or unsaturated carboxylic acids, carboxylic anhydrides, amines, amides or esters having a linear or branched, saturated or unsaturated C₈-C₃₀ group or substituent in their molecule.

10. The binder composition of any one of claims 1 to 9 further comprising a curing accelerator and, optionally, other conventional binder additives.

11. The binder composition of claim 10 which comprises phosphinic acid as a curing accelerator.

12. The binder composition of any one of claims 1 to 11 which comprises 0.01 to 20 wt.%, preferably 0.1 to 10 wt.% and more preferably 0.2 to 5 wt.% of hydrolytic stability-improving agent, based on the total solids content of the binder composition.

13. A method of producing a bonded mineral fiber product which comprises the steps of contacting the mineral fibers or mineral fiber product with a binder composition according to any one of claims 1 to 12, and curing the binder composition.

14. The method of claim 13 wherein curing is effected at a curing temperature of from about 225°C to about 300°C.

15. Mineral fiber product comprising mineral fibers in contact with the cured binder composition according to any one of claims 1 to 12.

## Patentansprüche

1. Wässrige Bindemittelzusammensetzung für Mineralfasern, umfassend:
- eine wasserlösliche Bindemittelkomponente, erhältlich durch Umsetzen von mindestens einem Alkanolamin mit mindestens einem Carbonsäureanhydrid und gegebenenfalls Behandeln des Reaktionsprodukts mit einer Base; und
- mindestens ein Mittel zur Verbesserung der Hydrolysestabilität, ausgewählt aus Allylaminen; SBR-Latices; und Verbindungen mit mindestens einer langkettigen aliphatischen Einheit und mindestens einer funktionellen Gruppe, wobei die aliphatische Einheit ausgewählt ist aus linearen oder verzweigten, gesättigten oder ungesättigten C₈-C₃₀-Gruppen oder Substituenten und die funktionelle Gruppe ausgewählt ist aus Carboxyl-, Anhydrid-, Ester-, Amin- und Amidgruppen.

2. Bindemittelzusammensetzung nach Anspruch 1, wobei die wasserlösliche Bindemittelkomponente das Umsetzungsprodukt von mindestens einem Alkanolamin mit mindestens einem Carbonsäureanhydrid in einem Äquivalentverhältnis von Amin- und Hydroxygruppen (NH + OH) zu Carboxygruppen (COOH) von mindestens 0,4 umfasst.

3. Bindemittelzusammensetzung nach Anspruch 1 oder 2, wobei mindestens ein Carbonsäureanhydrid ausgewählt ist aus cycloaliphatischen und/oder aromatischen Anhydriden.

4. Bindemittelzusammensetzung nach Anspruch 3, wobei das Carbonsäureanhydrid eine Kombination eines cycloaliphatischen und eines aromatischen Anhydrids umfasst.

5. Bindemittelzusammensetzung nach 3 oder 4, wobei das cycloaliphatische Anhydrid ausgewählt ist aus Tetrahydrophthalsäureanhydrid, Hexahydrophthalsäureanhydrid und Methyltetrahydrophthalsäureanhydrid.

6. Bindemittelzusammensetzung nach irgendeinem der Ansprüche 3 bis 5, wobei das aromatische Anhydrid ausgewählt ist aus Phthalsäureanhydrid, Methylphthalsäureanhydrid, Trimellitsäureanhydrid und Pyromellitsäuredianhydrid.

7. Bindemittelzusammensetzung nach irgendeinem der Ansprüche 1 bis 6, wobei das Alkanolamin ausgewählt ist aus Diethanolamin, Triethanolamin, Diisopropanolamin, Triisopropanolamin, Methyldiethanolamin, Ethyldiethanolamin, n-Butyldiethanolamin, Methyldiisopropanolamin, Ethylisopropanolamin, Ethyldiisopropanolamin, 3-Amino-1,2-propandiol, 2-Amino-1,3-propandiol und Tris(hydroxymethyl)aminomethan.

8. Bindemittelzusammensetzung nach irgendeinem der Ansprüche 1 bis 7, wobei das die Hydrolysestabilität verbessernde Mittel ein Allylamin ausgewählt aus Monoallylamin, Diallylamin und Triallylamin ist.

9. Bindemittelzusammensetzung nach irgendeinem der Ansprüche 1 bis 7, wobei das die Hydrolysestabilität verbessernde Mittel eine Verbindung mit mindestens einer langkettigen aliphatischen Einheit und mindestens einer funktionellen Gruppe ist, und ausgewählt ist aus gesättigten oder ungesättigten Fettsäuren, Fettaminen, Fettamiden oder Fettestern; und gesättigten oder ungesättigten Carbonsäuren, Carbonsäureanhydriden, Aminen, Amiden oder Estern mit einer linearen oder verzweigten, gesättigten oder ungesättigten C₈-C₃₀-Gruppe oder Substituenten in ihrem Molekül.

10. Bindemittelzusammensetzung nach irgendeinem der Ansprüche 1 bis 9, ferner umfassend einen Härtungsbeschleuniger und gegebenenfalls andere herkömmliche Bindemitteladditive.

11. Bindemittelzusammensetzung nach Anspruch 10, die Phosphinsäure als einen Härtungsbeschleuniger umfasst.

12. Bindemittelzusammensetzung nach irgendeinem der Ansprüche 1 bis 11, die 0,01 bis 20 Gew.-%, bevorzugt 0,1 bis 10 Gew.-% und bevorzugter 0,2 bis 5 Gew.-% des die Hydrolysestabilität verbessernden Mittels, bezogen auf den Gesamtfeststoffgehalt der Bindemittelzusammensetzung, enthält.

13. Verfahren zur Herstellung eines gebundenen Mineralfaserprodukts, umfassend die Schritte des Inkontaktbringens der Mineralfasern oder des Mineralfaserprodukts mit einer Bindemittelzusammensetzung nach irgendeinem der Ansprüche 1 bis 12 und des Härtens der Bindemittelzusammensetzung.

14. Verfahren nach Anspruch 13, wobei das Härten bei einer Härtungstemperatur von etwa 225 °C bis etwa 300 °C durchgeführt wird.

15. Mineralfaserprodukt, umfassend Mineralfasern in Kontakt mit der gehärteten Bindemittelzusammensetzung nach irgendeinem der Ansprüche 1 bis 12.

## Revendications

1. Composition aqueuse de liant pour fibres minérales comprenant :
- un composant liant soluble dans l'eau pouvant être obtenu par réaction d'au moins une alcanolamine avec au moins un anhydride carboxylique et, éventuellement, traitement du produit réactionnel avec une base ; et
- au moins un agent améliorant la stabilité hydrolytique choisi parmi les allylamines ; les latex de SBR ; et les composés ayant au moins un groupement aliphatique à longue chaîne et au moins un groupe fonctionnel, ledit groupement aliphatique étant choisi parmi les groupes ou substituants en C₈ à C₃₀ linéaires ou ramifiés, saturés ou insaturés, et ledit groupe fonctionnel étant choisi parmi les groupes carboxyle, anhydride, ester, amine et amide.

2. Composition de liant selon la revendication 1, dans laquelle le composant liant soluble dans l'eau comprend le produit de la réaction d'au moins une alcanolamine avec au moins un anhydride carboxylique en un rapport équivalent des groupes amine et hydroxy (NH+OH) aux groupes carboxy (COOH) d'au moins 0,4.

3. Composition de liant selon la revendication 1 ou 2, dans laquelle au moins un anhydride carboxylique est choisi parmi les anhydrides cycloaliphatiques et/ou aromatiques.

4. Composition de liant selon la revendication 3, dans laquelle l'anhydride carboxylique comprend une combinaison d'un anhydride cycloaliphatique et d'un anhydride aromatique.

5. Composition de liant selon la revendication 3 ou 4, dans laquelle l'anhydride cycloaliphatique est choisi parmi l'anhydride tétrahydrophtalique, l'anhydride hexa-hydrophtalique et l'anhydride méthyl-tétrahydrophtalique.

6. Composition de liant selon l'une quelconque des revendications 3 à 5, dans laquelle l'anhydride aromatique est choisi parmi l'anhydride phtalique, l'anhydride méthyl-phtalique, l'anhydride trimellitique et le dianhydride pyromellitique.

7. Composition de liant selon l'une quelconque des revendications 1 à 6, dans laquelle l'alcanolamine est choisie parmi la diéthanolamine, la triéthanolamine, la diisopropanolamine, la triisopropanolamine, la méthyl-diéthanolamine, l'éthyldiéthanolamine, la n-butyl-diéthanolamine, la méthyldiisopropanolamine, l'éthyl-isopropanolamine, l'éthyldiisopropanolamine, le 3-amino-1,2-propanediol, le 2-amino-1,3-propanediol et le tris-(hydroxyméthyl)aminométhane.

8. Composition de liant selon l'une quelconque des revendications 1 à 7, dans laquelle l'agent améliorant la stabilité hydrolytique est une allylamine choisie parmi la monoallylamine, la diallylamine et la triallylamine.

9. Composition de liant selon l'une quelconque des revendications 1 à 7, dans laquelle l'agent améliorant la stabilité hydrolytique est un composé ayant au moins un groupement aliphatique à longue chaîne et au moins un groupe fonctionnel et est choisi parmi les acides gras, amines grasses, amides gras ou esters gras, saturés ou insaturés ; et les acides carboxyliques, anhydrides carboxyliques, amines, amides ou esters, saturés ou insaturés, ayant dans leur molécule un substituant ou groupe en C₈ à C₃₀ saturé ou insaturé, linéaire ou ramifié.

10. Composition de liant selon l'une quelconque des revendications 1 à 9, comprenant en outre un accélérateur de durcissement et éventuellement d'autres additifs conventionnels pour liants.

11. Composition de liant selon la revendication 10, qui comprend de l'acide phosphinique en tant qu'accélérateur de durcissement.

12. Composition de liant selon l'une quelconque des revendications 1 à 11, qui comprend 0,01 à 20 % en poids, de préférence 0,1 à 10 % en poids et mieux encore 0,2 à 5 % en poids d'agent améliorant la stabilité hydrolytique, par rapport à la teneur totale en solides de la composition de liant.

13. Procédé de production d'un produit en fibres minérales liées qui comprend les étapes de mise en contact des fibres minérales ou du produit en fibres minérales avec une composition de liant selon l'une quelconque des revendications 1 à 12, et de durcissement de la composition de liant.

14. Procédé selon la revendication 13, dans lequel le durcissement est effectué à une température de durcissement d'environ 225°C à environ 300°C.

15. Produit en fibres minérales comprenant des fibres minérales en contact avec la composition de liant durcie selon l'une quelconque des revendications 1 à 12.
